# EUROPEAN PATENT APPLICATION

(11) **EP 2 460 451 A1**
(43) Date of publication of application: **06.06.2012**
(21) Application number: 10804603.8
(22) Date of filing: 18.03.2010
(51) Int. Cl.: A47J 36/34

(54) **DETACHABLE HANDLE SUITABLE FOR COOKING VESSELS**

(30) Priority: 29.07.2009 KR 20090069285
(71) Applicant: Seowon Pallas Inc., Gyeonggi-do415-871 (KR)
(72) Inventor: SEO, Ki Won, Seoul 150-918 (KR)
(74) Representative: Gille Hrabal
(86) International application number: PCT/KR2010/001667
(87) International publication number: WO 2011/013890

(57) **Abstract**

The present invention provides a detachable handle suitable for cooking vessels such as frying pans, pots and the like which are provided without a handle for effective storage, wherein the detachable handle is detachably installed at a flange of a cooking vessel having a protruded rim at an upper circumference, and comprises: a main body which has a fixed holding portion contacting from the upper end of the flange to an inner circumference wall at an end, and has an accommodation room inside; an operation lever which has a movable holding portion contacting from the outer circumference wall of the flange of the cooking vessel to the protruded rim at an end for holding the cooking vessel through the relation with the fixed holding portion, and is rotatably supported inside the accommodation room so as to enter or exit the accommodation room; and a control button which locks and unlocks the operation lever in cooperation with the entrance and exit of the operation lever. The detachable handle suitable for cooking vessels thereby has a simple structure and is locked and unlocked by a convenient pushing operation.

## Description

### [Technical Field]

The present invention relates to a detachable handle suitable for cooking vessels such as frying pans, pots and the like which are provided without a handle for effective storage, and particularly, to a detachable handle suitable for cooking vessels, which can be stably and firmly installed with a simple operation.

### [Background Art]

Generally, in order to effectively utilize a storage space in the kitchen for cooking vessels such as frying pans, pots and the like, a handle for cooking vessels are provided in a detachable manner. Various detachable handles for cooking vessels have been developed and used until now.

Detachable handles are initiatively or subsidiarily used to move a heated cooking vessel or a cooking vessel having foods according to cooking conditions.

The detachable handle for grasping the cooking vessel may be classified into a one-hand type formed into a rod shape and a two-hand type formed into a wing shape. The one-hand type detachable handle is mainly used in a light vessel such as a frying pan which is light and frequently moved. The one-hand type detachable handle included a rod-shaped main body which has a proper length so as to be grasped with one hand, and a grasping member which is disposed at a front end of the main body so as to be moved forward and backward using rotation of a lever and thus to grasp or release the cooking vessel. And the lever may further include a locking means for securely grasping the cooking vessel.

Further, the two-hand type detachable handle is mainly used in a relatively large-sized cooking vessel which is heavy and needs to grasp with two hands due to its heavy weight. The two-hand type detachable handle includes a wing-shaped main body which has a proper length so as to be grasped with two hands, and a grasping member which is disposed at a front end of the main body so as to be moved forward and backward using rotation of a lever and thus to grasp or release the cooking vessel.

As described above, the two-hand type detachable handle has been developed according to one or more aims for structural complexity, grasping reliability and using convenience such as whether it is possible to operate the detachable handle with one hand when attaching and detaching the handle or both hands have to be used. Therefore, it is required to develop a new detachable handle which can be facilely and stably operated upon the attachment and detachment of the handle and also which can stably move the heated cooking vessel.

### [Disclosure of Invention]

### [Technical Problem]

An object of the present invention is to provide a detachable handle suitable for cooking vessels, which improves a conventional two-hand type handle so as to facilely grasp both sides of a large-sized cooking vessel and stably move it, and which has a simple structure so as to be easily attached and detached by a simple operation and thus to surely grasp and move the heated cooking vessel.

### [Technical Solution]

To achieve the object of the present invention, the present invention provides a detachable handle which is detachably installed at a flange of a cooking vessel having a protruded rim at an upper circumference, including: a main body which has a fixed holding portion contacting from the upper end of the flange to an inner circumference wall at an end, and has an accommodation room inside; an operation lever which has a movable holding portion contacting from the outer circumference wall of the flange of the cooking vessel to the protruded rim at an end for holding the cooking vessel through the relation with the fixed holding portion, and is rotatably supported inside the accommodation room so as to enter or exit the accommodation room; and a control button which locks and unlocks the operation lever in cooperation with the entrance and exit of the operation lever.

### [Advantageous Effects]

The detachable handle suitable for cooking vessels according to the present invention as described above has a simple structure and also can be firmly attached to the cooking vessel so as to stably move the heated cooking vessel. Further, it can be facilely and easily attached to and detached from the cooking vessel, thereby providing convenience to a user when using the cooking vessel.

### [Brief Description of Drawings]

Fig. 1 is a plan view of a cooking vessel with a handle according to the present invention.
Fig. 2 is a cross-sectional view taken along a line A-A of Fig. 1.
Fug. 3 is a cross-sectional view taken along a line B-B of Fig. 1.
Fig. 4 is an exploded perspective view of the handle according to the present invention.
Fig. 5 is a conceptual view showing that the handle according to the present invention is attached to a cooking vessel.
Fig. 6 is a conceptual view showing that the handle according to the present invention is detached from a cooking vessel.
Fig. 7 is a cross-sectional view taken along a line C-C of Fig. 6.

### [Detailed Description of Main Elements]

| | |
|---|---|
| 10: cooking vessel | 12: flange |
| 14: protruded rim | 20: operation lever |
| 21: hooking structure | 24: movable holding portion |
| 26: returning member | 30: control button |
| 32: hooking structure | 34: returning member |
| 100: main body | 122: fixed holding portion |

### [Best Mode for Carrying Out the Invention]

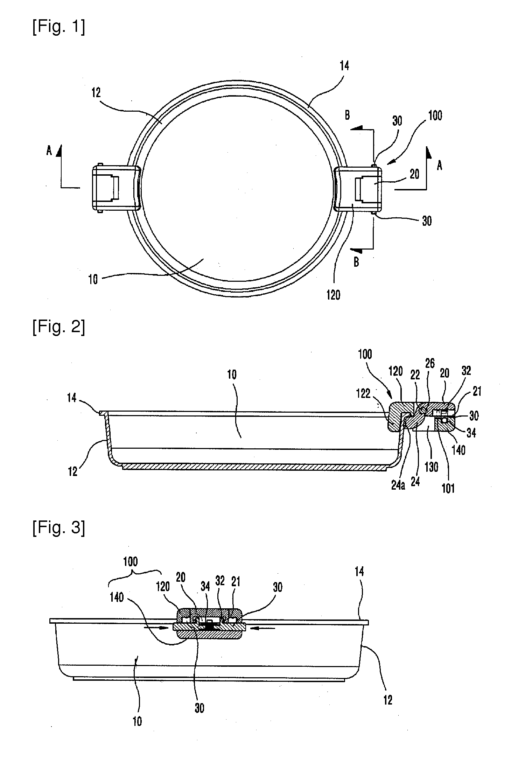

Hereinafter, the embodiments of the present invention will be described in detail with reference to accompanying drawings. Fig. 1 is a view showing that a handle is attached to both sides of a cooking vessel according to an embodiment of the present invention. As shown in Figs. 2 to 4, the handle of the present invention includes a rectangular main body 100 having a proper size which can be held by tips of fingers.

The main bods 100 is divided into upper and lower parts and thus consists of an upper body 120 and a lower body 140. The upper and lower bodies 120 and 140 are coupled to each other by using a coupling member 101.

Further, an accommodation room 130 which is opened up and down is formed between the upper body 120 and the lower body 140 of the main body 100. In the accommodation room 130, there is disposed an operation level 20 which is pivoted around a supporting shaft 22 so as to grasp or release a cooking vessel 10 in cooperation with the main body 100.

An end of the operation lever 20 which is pivoted in the accommodation room 130 is entered into or left from the accommodation room 130 so as to be protruded from the main body 100. Herein, the protruding action of the operation lever 20 means a standby state for grasping the cooking vessel.

Further, in the standby state of the operation lever 20, the operation lever 20 is elastically supported by a returning member 26 such as a torsion spring disposed at the supporting shalt 22 of the operation lever 20 so as to be always automatically returned to its original position.

According to the present invention, as described above, the main body 100 includes the upper and lower bodies 120 and 140 which are coupled to and separated from each other. Herein, the upper body 120 which is detachably coupled to the lower body 140 functions as a cover for other parts to be described later.

Further, the upper body 120 of the main body 100 includes a fixed holding potion 122 which is contacted from an outwardly protruded rim 14 formed at an upper end of a flange 12 of the cooking vessel 10 to an inner surface of the flange 12.

And the operation lever 20 disposed in the accommodation room 130 between the upper and lower bodies 120 and 140 includes a movable holding portion 24 which is formed into a step shape and of which an end supports a lower surface of the protruded rim 14 of the flange 12 of the cooking vessel 10 and is in contact with an outer surface of the flange 12 of the cooking vessel. The operation lever 20 provided with the movable holding portion 24 functions to grasp or release the flange 12 of the cooking vessel 10 together with the fixed holding portion 122.

Meanwhile, at a rear end of the main body 100, there is provided a control button 30 for controlling the grasping and releasing state of the operation lever 20 according to the entrance and exit of the operation lever 20.

The control burton 30 is disposed within a rotational radius of the operation lever 20. The control burton 30 is elastically supported by a pair of returning members 34 for always returning the control button 30 and also disposed to be moved forward and backward in a receiving hole 132 provided in crossed direction to the rotation of the operation lever 20 and thus to cooperate with the entrance and exit of the operation lever 20.

Further, on each opposite surface of the operation lever 20 and the control burton 30, there are respectively provided hooking structures 21 and 32 which have inclined surfaces so as to be slid when being contacted with each other and also to be coupled to and separated from each other.

The hooking structures 21 and 32 of the operation lever 20 and the control burton 30, which can be slid to each other, converts a rotating motion of the operation lever 20 occurred upon the entrance and exit of the operation lever 20 into a rectilinear motion of the control button 30 and thus performs the control function of the control burton 30. In other words, the grasping state of the handle is maintained and released according to the coupling and separating of the hooking structures 21 and 32.

Further, a buffering member 24a formed of a heat resistant rubber material for preventing skidding or absorbing shock is provided at one of opposite surfaces of the fixed holding potion 122 of the main body 100 and the movable holding portion 24 of the operation level 20.

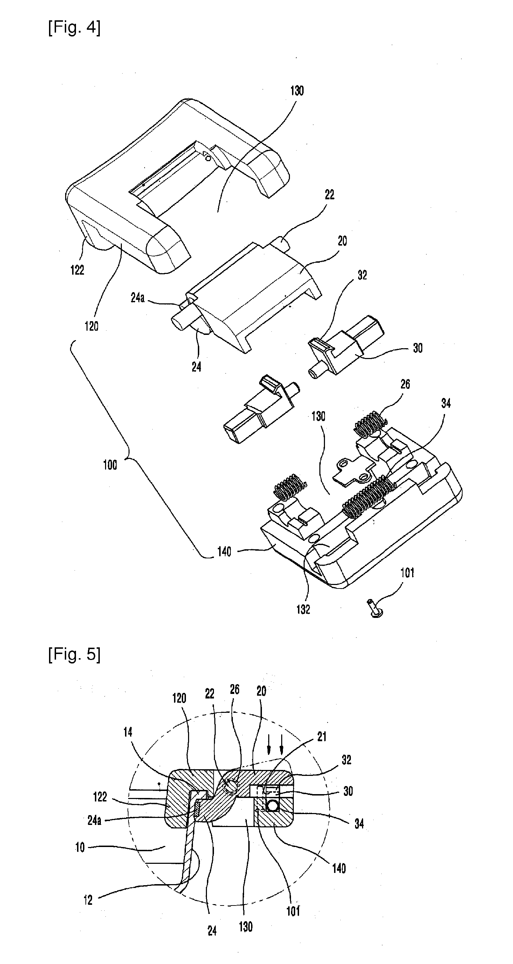

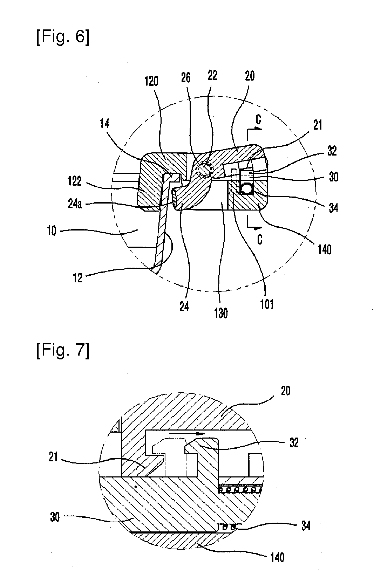

Figs. 5 and 6 are conceptual views showing that the handle is attached to and detached from the cooking vessel 10 according to the present invention.

Firstly, Fig. 5 shows that the handle of the present invention is attached to the flange 12 of the cooking vessel 10. If the operation lever 20 protruded on the upper surface of the main body 100 is pressed in an arrow direction, the end of the operation lever 20 is entered into the accommodation room 130 and the returning member 26 is compressed, and the fixed holding potion 122 of the main body 100 and the movable holding portion 24 of the operation lever 20 are cooperated with each other so as to stably and firmly grasp the flange 12 of the cooking vessel 10. Herein, the grasping state is maintained by the hooking structures 21 and 32 of the operation lever 20 and the control button 30.

Fig. 6 shows a state before the handle is attached to the cooking vessel 10 or a state that the handle is detached from the cooking vessel 10. If the protruded control button 30 is pushed in, the hooking structures 21 and 32 which are coupled to each other are separated from each other as shown in Fig. 7, and the operation lever 20 is left from the accommodation room 130 by a returning force of the compressed returning member 26 and then returned to its original state before grasping the cooking vessel, thereby releasing the flange 12 of the cooking vessel 10.

As described above, the detachable handle suitable for cooking vessels according to the present invention may be attached to both sides of the flange 12 of the cooking vessel 10 so as to to be moved by using both hands. Otherwise, a conventional rod type handle may be used at one side thereof and the handle according to the present invention may be used at the other side thereof.

While the present invention has been described with respect to the specific embodiments, it will be apparent to those skilled in the art that various changes and modifications may be made without departing from the scope of the invention as defined in the following claims.

## Claims

1. A detachable handle which is detachably installed at a flange (12) of a cooking vessel (10) having a protruded rim (14) at an upper circumference, comprising:
a main body (100) which has a fixed holding portion (122) contacting from the upper end of the flange to an inner circumference wall at an end, and has an accommodation room (130) inside;
an operation lever (20) which is disposed in the accommodation room to be pivoted so that an end thereof is entered into or left from the accommodation room, and which has a movable holding portion (24) for grasping and releasing the cooking vessel in cooperation with the fixed holding portion; and
a control button (30) which locks and unlocks the operation lever in cooperation with the entrance and exit of the operation lever.

2. The detachable handle according to claim 1, the main body is divided into upper and lower parts and thus consists of an upper body (120) and a lower body (140).

3. The detachable handle according to any preceding claim, wherein the operation lever and control button are coupled to and separated from each other by using hooking structures (21, 32).

4. The detachable handle according to any preceding claim, further comprises a returning member (26) which allows the operation lever to be automatically left from the accommodation room upon leaving of the control button.

5. The detachable handle according to any preceding claim, further comprises a returning member (34) which allows the control button to be always automatically returned to a grasping state.
